(19) Europäisches Patentamt
European Patent Office
Office européen des brevets

(11) EP 2 666 818 B1

(12) **EUROPEAN PATENT SPECIFICATION**

(45) Date of publication and mention of the grant of the patent:
**26.10.2016 Bulletin 2016/43**

(51) Int Cl.:
***C08L 23/12*** *(2006.01)*

(21) Application number: **12168692.7**

(22) Date of filing: **21.05.2012**

(54) **High flow polypropylene with excellent mechanical properties**

Polypropylen mit hohem Durchfluss mit ausgezeichneten mechanischen Eigenschaften

Polypropylène à flux élevé ayant d'excellentes propriétés mécaniques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.11.2013 Bulletin 2013/48**

(73) Proprietor: **Borealis AG**
**1220 Vienna (AT)**

(72) Inventors:
- **Tranninger, Cornelia**
  **4055 Pucking (AT)**
- **Doshev, Petar**
  **4040 Linz (AT)**
- **Gloger, Dietrich**
  **4020 Linz (AT)**
- **Gahleitner, Markus**
  **4501 Neuhofen/Krems (AT)**

(74) Representative: **Lux, Berthold**
**Maiwald Patentanwalts GmbH**
**Elisenhof**
**Elisenstraße 3**
**80335 München (DE)**

(56) References cited:
**EP-A1- 2 036 947**
**EP-A1- 2 415 831**
**WO-A1-2010/149549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 666 818 B1

## Description

The present invention is directed to a new polymer composition and its use.

Heterophasic propylene copolymers are well known in the art. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomer. The term inclusion indicates that the matrix and the inclusion form different phases within the heterophasic propylene copolymer, said inclusions are for instance visible by high resolution microscopy, like electron microscopy or scanning force microscopy.

One application of the heterophasic propylene copolymers is its use as packaging material. In this market segment, down-gauging and light-weighing is a recurring market need, since it allows for energy and material savings. In order to provide a material equipped with these features, a high stiff material with good impact properties needs to be developed. The high stiffness enables lower wall thicknesses. Furthermore, a cycle time reduction is possible since a certain stiffness needed for demoulding of the specimen is reached at shorter cooling times. However, the impact performance, which determines application performance like drop height, needs to stay on a high level. Additionally, the materials should show high flowability. Otherwise injection moulding of specimen with thin wall thickness is not possible. High flow materials generally show high stiffness due to shorter polymer chains having high stereoregularity. However, the impact performance becomes reduced due to shorter polymer chains, which form less entanglement.

Thus, the object of the present invention is to obtain a material of high flowability and stiffness and good impact performance and low hexane soluble content. In particular, it is an object of the present invention to obtain a material having a high flowability, a high stiffness, a high puncture energy, a high Charpy impact strength and a low hexane soluble content.

The foregoing and other objectives are solved by the subject-matter of the present invention. Advantageous embodiments of the inventive method are defined in the corresponding subclaims.

The specific finding of the present invention is to provide a polymer composition based on a heterophasic material and a high density polyethylene, wherein the heterophasic material is featured by a broad molecular weight distribution and rather moderate xylene cold soluble content (XCS) and comonomer content. Preferably the heterophasic material comprises a matrix of at least three polypropylene fractions which differ in the melt flow rate and thus setting up a broad molecular weight distribution in the matrix.

Accordingly the present invention is directed to a polymer composition having a melt flow rate $MFR_2$ (230 °C) measured according to ISO 1133 of at least 25.0 g/10min, said polymer composition comprises

(a) a propylene copolymer (Co) having

(a1) a xylene cold soluble (XCS) content determined according to ISO 16152 (25 °C) in the range of 7.0 to below 20.0 wt.-%;
(a2) a comonomer content in the range of 3.0 to 12.0 wt.-%;
(a3) a shear thinning index (SHI 0/50) of at least 7.5;

wherein further

(a4) the xylene cold soluble (XCS) fraction of the propylene copolymer (Co) has a comonomer content in the range of 25.0 to 45.0 wt.-%;
and

(b) a high density polyethylene (HDPE).

The polymer composition may comprise additionally a mineral filler (F). Accordingly it the present invention is in particular directed to a polymer composition comprising

(a) 75 to 97 wt.-% of the propylene copolymer (Co);
(b) 3 to equal or below 20 wt.-% of the high density polyethylene (HDPE); and
(c) optionally up to 5 wt.-% of the mineral filler (F).

Preferably the propylene copolymer (Co) and the high density polyethylene (HDPE) are the only polymer components in the polymer composition. In another preferred embodiment in which additives (A) are provided by a masterbatch, the polymer composition comprises the propylene copolymer (Co), the high density polyethylene (HDPE) and a polyolefin (PO) originating from the masterbatch as the only polymer components.

It has surprisingly found that the instant polymer composition is featured by very high impact without compromising the stiffness. Further the polymer composition has a rather high melt flow rate, which is appreciated under process aspects.

In the following the invention will be described in more detail.

**The polymer composition**

The polymer composition must comprise the propylene copolymer (Co) and the high density polyethylene (HDPE), which will be defined in more detail below. Additionally the polymer composition may comprise in addition to typical additives (A) also a mineral filler (F) which will be also discussed in more detail below. According to the instant invention the terms "additives (A)" and the "mineral filler (F)" define different components. Therefore the polymer composition comprises

(a) 75 to 97 wt.-%, preferably 78 to 92 wt.-%, more preferably 80 to 90 wt.-%, of the propylene copolymer (Co);
(b) 3 to equal or below 20 wt.-%, preferably 4 to 18 wt.-%, more preferably 5 to 15 wt.-%, of the high density polyethylene (HDPE); and
(c) optionally up to 5 wt.-%, preferably 0.5 to 5 wt.-%, more preferably 1 to 3 wt.-%, of the mineral filler (F);

based on the total amount of the polymer composition.

The total amount of additives (A) shall preferably not exceed 4 wt.-% and is preferably in the range of 1 to 4 wt.-% based on the total amount of the composition (Co). The additives (A) may included into the polymer composition in form of a masterbatch (M), which comprises the additives (A) and a polyolefin (PO). In such a case the instant polymer composition may comprise additionally a polyolefin (PO) up to 2 wt.-%, i.e. from 0.5 to 1.5 wt.-%, based on the total polymer composition.

Accordingly in one preferred embodiment the polymer composition comprises as polymer components only the propylene copolymer (Co), the high density polyethylene (HDPE), and optionally the polyolefin (PO). In other words the polymer composition may comprise further non-polymeric components but no other polymers as the propylene copolymer (Co), the high density polyethylene (HDPE), and optionally the polyolefin (PO). In one specific embodiment the present polymer composition consists of the propylene copolymer (Co), the high density polyethylene (HDPE), the filler (F), the additives (A) and the optional polyolefin (PO).

The instant polymer composition preferably has a melt flow rate $MFR_2$ (230 °C) of at least 25.0 g/10min, more preferably of at least 28 g/10min, more preferably in the range of 25.0 to 150 g/10min, still more preferably in the range of 28.0 to 100 g/10min, like in the range of 30.0 to 80 g/10min.

Preferably the instant polymer composition is featured by a broad molecular weight distribution. Accordingly the instant polymer composition has a shear thinning index (SHI 0/50), defined as the ratio between the zero shear viscosity ($\eta_0$) and the viscosity at a shear stress of 50 kPa, of at least 7.5, more preferably in the range of 7.5 to 13.0, still more preferably in the range of 8.0 to 12.5, like 8.5 to 12.0.

Alternatively or additionally to the a shear thinning index (SHI 0/50), the instant polymer composition has a shear thinning index (SHI 0/100), defined as the ratio between the zero shear viscosity ($\eta_0$) and the viscosity at a shear stress of 100 kPa, of at least 15.0, more preferably in the range of 15.0 to 25.0, still more preferably in the range of 15.5 to 24.0, like 16.0 to 23.0.

Preferably it is desired that the instant polymer composition is thermomechanically stable. Accordingly, it is appreciated that the instant polymer composition has a melting temperature of at least 155 °C, more preferably of at least 160°C, still more preferably in the range of 160 to 170 °C.

In a further preferred embodiment of the present invention, the instant polymer composition is preferably featured by a tensile modulus measured according to ISO 527 of at least 1,500 MPa, more preferably in the range from 1,500 to 2,700 MPa. For example, the instant polymer composition is featured by a tensile modulus measured according to ISO 527 in the range of 1,600 to 2,300 MPa, preferably in the range of 1,700 to 2,100 MPa.

Additionally or alternatively, the instant polymer composition is preferably featured by a Charpy notched impact strength measured according to ISO 179 (1eA; 23 °C) of at least 4.5 $kJ/m^2$ and more preferably of at least 5.0 $kJ/m^2$. For example, the instant polymer composition is featured by a Charpy notched impact strength measured according to ISO 179 (1ea; 23 °C) in the range of 4.5 to 15 $kJ/m^2$, preferably in the range of 5.0 to 12.0 $kJ/m^2$.

Additionally or alternatively, the instant polymer composition is preferably featured by a puncture energy (+23 °C) determined in the instrumental falling weight (IFW) test according to ISO 6603-2 using injection moulded plaques of 60x60x2 mm of at least 17 J and more preferably of at least 20 J. For example, the instant polymer composition is featured by a puncture energy (+23 °C) determined in the instrumental falling weight (IFW) test according to ISO 6603-2 using injection moulded plaques of 60x60x2 mm in the range of 17 to 50 J, preferably in the range of 20 to 40 J.

Additionally or alternatively, the instant polymer composition is preferably featured by a puncture energy (-20

°C) determined in the instrumental falling weight (IFW) test according to ISO 6603-2 using injection moulded plaques of 60x60x2 mm of at least 4, more preferably of at least 6 J. For example, the instant polymer composition is featured by a puncture energy (-20 °C) determined in the instrumental falling weight (IFW) test according to ISO 6603-2 using injection moulded plaques of 60x60x2 mm in the range of 6 to 25 J, preferably in the range of 7 to 22 J.

Further the polymer composition of the instant invention is featured by its low amount of extractables. Accordingly it is preferred that the polymer composition has a hexane soluble content of below 6.0 wt.-%, more preferably in the range of 1.0 to 6.0 wt.-%, still more preferably in the range of 1.5 to 4.0 wt.-%.

Further the instant polymer composition can be defined by its xylene cold soluble (XCS) fraction. Accordingly it is appreciated that the polymer composition has a xylene cold soluble (XCS) fraction of not more than 20.0 wt.-%, more preferably in the range of 7.0 to 20.0 wt.-%, still more preferably in the range of 7.5 to 18.0 wt.-%, yet more preferably in the range of 8.5 to 15.0 wt.-%, even more preferably in the range of 9.0 to 12.0 wt.-%.

The polymer composition is in particular defined by the high density polyethylene (HDPE) and the propylene copolymer (Co) comprising preferably a matrix (M) and an elastomeric propylene copolymer (EC) dispersed therein. Accordingly all components, i.e. the (HDPE) and the propylene copolymer (Co) with its matrix (M) and its elastomeric propylene copolymer (EC) are defined in more detail below.

For mixing the individual components of the polymer composition, a conventional compounding or blending apparatus, e.g. a Banbury mixer, a 2-roll rubber mill, Buss-co-kneader or a twin screw extruder may be used. Preferably, mixing is accomplished in a corotating twin screw extruder. The polymer composition recovered from the extruder is usually in the form of pellets. These pellets are then preferably further processed, e.g. by molding, like injection molding, to generate (injection) molded articles as defined in more detail below.

**The propylene copolymer (Co)**

The propylene copolymer (Co) comprises apart from propylene also comonomers. Preferably the propylene copolymer (Co) comprises apart from propylene ethylene and/or $C_4$ to $C_{12}$ $\alpha$-olefins. Accordingly the term "propylene copolymer" according to this invention is understood as a polypropylene comprising, preferably consisting of, units derivable from

(a) propylene
and
(b) ethylene and/or $C_4$ to $C_{12}$ $\alpha$-olefins.

Thus the propylene copolymer (Co) according to this invention comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the propylene copolymer (Co) according to this invention comprises, especially consists of, monomers copolymerizable with propylene from the group consisting of ethylene, 1-butene and 1-hexene. More specifically the propylene copolymer (Co) of this invention comprises - apart from propylene - units derivable from ethylene and/or 1-butene. In a preferred embodiment the propylene copolymer (Co) according to this invention comprises units derivable from ethylene and propylene only.

Additionally it is appreciated that the propylene copolymer (Co) preferably has a rather moderate total comonomer content which contributes to the stiffness of the material. Thus it is required that the comonomer content of the propylene copolymer (Co) is in the range of 3.0 to 12.0 wt.-%, more preferably in the range of 3.5 to 11.0 wt.-%, yet more preferably in the range of 4.0 to 10.0 wt.-%, still more preferably in the range of 4.0 to 8.0 wt.-%.

On the other hand it is preferred that the comonomer content in the xylene cold soluble fraction (XCS) of the propylene copolymer (Co) is rather high. Thus it is appreciated that the comonomer content of the xylene cold soluble fraction (XCS) of the propylene copolymer (Co) is in the range of 25.0 to 45.0 wt.-%, yet more preferably in the range of 30.0 to 42.0 wt.-%, still more preferably in the range of 33.0 to 40.0 wt.-%.

Accordingly, the propylene copolymer (Co) of the instant invention can be further defined by the amount of comonomers within the xylene cold soluble (XCS) fraction versus the comonomer content of the total propylene copolymer (Co). Accordingly it is preferred that the propylene copolymer (Co) fulfills inequation (I), more preferably inequation (Ia), yet more preferably inequation (Ib), still more preferably inequation (Ic),

$$\frac{\text{Co (XCS)}}{\text{Co (total)}} \geq 6.0, \quad \text{(I)},$$

$$\frac{\text{Co (XCS)}}{\text{Co (total)}} \geq 6.5, \quad \text{(Ia)}$$

$$10.0 \geq \frac{\text{Co (XCS)}}{\text{Co (total)}} \geq 6.0, \quad \text{(Ib)}$$

$$9.0 \geq \frac{\text{Co (XCS)}}{\text{Co (total)}} \geq 6.6, \quad \text{(Ic)}$$

wherein

Co (total) is the comonomer content [wt.-%] of the propylene copolymer (Co)
Co (XCS) is the comonomer content [wt.-%] of the xylene cold soluble fraction (XCS) of the propylene copolymer (Co).

Concerning the comonomers present in the xylene cold soluble fraction (XCS) it is referred to the information provided for the propylene copolymer (Co). Accordingly in a specific embodiment the xylene cold soluble fraction (XCS) comprises, especially consists of, monomers copolymerizable with propylene from the group consisting of ethylene, 1-butene and 1-hexene. More specifically the xylene cold soluble fraction (XCS) comprises - apart from propylene - units derivable from ethylene and/or 1-butene. In a preferred embodiment the xylene cold soluble fraction (XCS) comprises units derivable from ethylene and propylene only.

Another characteristic feature of the instant propylene copolymer (Co) is its rather moderate xylene cold soluble (XCS) fraction. Accordingly it is appreciated that the propylene copolymer (Co) has a xylene cold soluble (XCS) fraction of not more than 20.0 wt.-%, more preferably in the range of 7.0 to 20.0 wt.-%, still more preferably in the range of 7.5 to 18.0 wt.-%, yet more preferably in the range of 8.5 to 15.0 wt.-%.

Further it is appreciated that the xylene cold soluble (XCS) fraction of the propylene copolymer (Co) is specified by its intrinsic viscosity. A low intrinsic viscosity (IV) value reflects a low weight average molecular weight. For the present invention it is preferred that the xylene cold soluble fraction (XCS) of propylene copolymer (Co) has an intrinsic viscosity (IV) of equal or below 3.0 dl/g, more preferably in the range of 1.8 to below 3.0 dl/g, still more preferably in the range of 1.9 to 2.8 dl/g, yet more preferably like in the range of 2.0 to 2.5 dl/g.

Preferably it is desired that the propylene copolymer (Co) is thermomechanically stable, so that for instance a thermal sterilization process can be accomplished. Accordingly it is appreciated that the propylene copolymer has a melting temperature of at least 155 °C, more preferably of at least 160 °C, still more preferably in the range of 160 to 170 °C, like in the range of 162 to 168 °C.

Another important feature of the propylene copolymer (Co) is its broad molecular weight distribution. Accordingly the instant propylene copolymer (Co) has a shear thinning index (SHI 0/50), defined as the ratio between the zero shear viscosity ($\eta_0$) and the viscosity at a shear stress of 50 kPa, of at least 7.5, more preferably in the range of 7.5 to 13.0, still more preferably in the range of 8.0 to 12.5, like 8.5 to 12.0.

Additionally or alternatively to shear thinning index (SHI 0/50), the propylene copolymer (Co) has a shear thinning index (SHI 0/100), defined as the ratio between the zero shear viscosity ($\eta_0$) and the viscosity at a shear stress of 100 kPa, of at least 15.0, more preferably in the range of 15.0 to 25.0, still more preferably in the range of 15.5 to 24.0, like 16.0 to 23.0.

The propylene copolymer (Co) according to this invention can be further defined by its rather high melt flow rate $MFR_2$ (230 °C). Accordingly the propylene copolymer (Co) preferably has a melt flow rate $MFR_2$ (230 °C) of at least 30.0 g/10min, more preferably of at least 40.0 g/10min, still more preferably in the range of 30.0 to 200 g/10min, still more preferably in the range of 35.0 to 150 g/10min, like in the range of 40.0 to 100 g/10min.

The instant propylene copolymer (Co) is preferably features by a (semi)crystalline fraction and an amorphous fraction. In other words the instant propylene copolymer (Co) is a mixture of a (semi)crystalline polymer and amorphous material. Such type of polymer is classified as heterophasic propylene copolymer. A heterophasic propylene copolymer comprises a polymer matrix, like a (semi)crystalline polypropylene, in which the amorphous material, like an elastomeric propylene copolymer, is dispersed. Thus in a preferred embodiment the instant propylene copolymer (Co) is heterophasic propylene copolymer (HECO). More precisely the instant propylene copolymer (Co) is heterophasic propylene copolymer (HECO) comprising a matrix (M) being a propylene homopolymer (H-PP) and dispersed therein an elastomeric propylene copolymer (EC). Thus the matrix (M) contains (finely) dispersed inclusions being not part of the matrix (M) and said inclusions contain the elastomeric propylene copolymer (EC). The term inclusion indicates that the matrix (M) and the inclusion form different phases within the propylene copolymer (Co), i.e. within the heterophasic propylene copolymer

(HECO), said inclusions are for instance visible by high resolution microscopy, like electron microscopy or scanning force microscopy.

Preferably the instant propylene copolymer (Co), i.e. the heterophasic propylene copolymer (HECO), according to this invention comprises as polymer components only the propylene homopolymer (H-PP) and the elastomeric propylene copolymer (EC). In other words the instant propylene copolymer (Co), i.e. the heterophasic propylene copolymer (HECO), may contain further additives but no other polymer in an amount exceeding 5 wt-%, more preferably exceeding 3 wt.-%, like exceeding 1 wt.-%, based on the total propylene copolymer (Co), i.e. based on the total heterophasic propylene copolymer (HECO). One additional polymer which may be present in such low amounts is a polyethylene which is a by-reaction product obtained by the preparation of the propylene copolymer (Co), i.e. of the heterophasic propylene copolymer (HECO) (see in detail below). Accordingly it is in particular appreciated that the instant propylene copolymer (Co), i.e. the heterophasic propylene copolymer (HECO), contains only the propylene homopolymer (H-PP), the elastomeric propylene copolymer (EC) and optionally polyethylene in amounts as mentioned in this paragraph.

Preferably the weight ratio between the matrix (M), i.e. the propylene homopolymer (H-PP), and the elastomeric propylene copolymer (EC) is 20/1 to 4/1, more preferably 15/1 to 6/1, yet more preferably 12/1 to 8/1.

In the following the matrix (M), i.e. the propylene homopolymer (H-PP), and the elastomeric propylene copolymer (EC) are defined more precisely.

As stated above the instant propylene copolymer (Co), i.e. the heterophasic propylene copolymer (HECO), is featured by a broad molecular weight distribution in terms of a rather high shear thinning index (SHI 0/50). This broad molecular weight distribution originates predominately from the propylene homopolymer (H-PP), i.e. from the matrix (M). Thus it is preferred that the propylene homopolymer (H-PP), i.e. the matrix (M), has a shear thinning index (SHI 0/50), defined as the ratio between the zero shear viscosity ($\eta_0$) and the viscosity at a shear stress of 50 kPa, of at least 7.5, more preferably in the range of 7.5 to 13.0, still more preferably in the range of 8.0 to 12.5, like 8.5 to 12.0.

The propylene homopolymer (H-PP), i.e. the matrix (M), can be further defined by its rather high melt flow rate $MFR_2$ (230 °C). Accordingly the propylene homopolymer (H-PP), i.e. the matrix (M), preferably has a melt flow rate $MFR_2$ (230 °C) of at least 40.0 g/10min, more preferably of at least 50.0 g/10min, still more preferably in the range of 40.0 to 300 g/10min, still more preferably in the range of 50.0 to 200 g/10min, like in the range of 60.0 to 150 g/10min.

The xylene cold soluble (XCS) content of the propylene homopolymer (H-PP), i.e. of the matrix (M), is preferably equal or below 5.0 wt.-%, more preferably equal or below 4.5 wt.-%, still more preferably in the range of 0.8 to 4.5 wt.-%, like in the range of 0.8 to 3.0 wt.-%.

Preferably the propylene homopolymer (H-PP), i.e. the matrix (M), has a melting temperature of at least 155 °C, more preferably at least 160 °C, even more preferably in the range of 160 to 170 °C, still more preferably in the range of 162 to 168 °C.

As mentioned above the instant propylene copolymer (Co), i.e. the heterophasic propylene copolymer (HECO), has a broad molecular weight distribution. This broad molecular weight distribution is preferably achieved by three propylene homopolymer fractions (H-PP1), (H-PP2) and (H-PP3) within the matrix (M), i.e. within the propylene homopolymer (H-PP), said polypropylene fractions (H-PP1), (H-PP2) and (H-PP3) differ in the weight average molecular weight (Mw) and thus also in the melt flow rate $MFR_2$.

Accordingly the matrix (M), i.e. the propylene homopolymer (H-PP), preferably comprises at least three, more preferably comprises three, yet more preferably consists of the three propylene homopolymer fractions (H-PP1), (H-PP2) and (H-PP3), the three propylene homopolymer fractions (H-PP1), (H-PP2) and (H-PP3) differ from each other by the melt flow rate $MFR_2$ (230 °C).

Preferably the melt flow rate $MFR_2$ (230 °C) decreases from the first propylene homopolymer fraction (H-PP1) to the third propylene homopolymer fraction (H-PP3). Thus the ratio between the melt flow rate $MFR_2$ (230 °C) of the first propylene homopolymer fraction (H-PP1) and the third propylene homopolymer fraction (H-PP3) [MFR (H-PP1) / MFR (H-PP3)] is preferably at least 15, more preferably at least 20 and/or the ratio between the melt flow rate $MFR_2$ (230 °C) of the second propylene homopolymer fraction (PP2) and the third propylene homopolymer fraction (PP3) [MFR (H-PP2) / MFR (H-PP3)] is preferably at least 8, more preferably at least 12.

In another preferred embodiment the melt flow rate $MFR_2$ (230 °C) decreases from the first propylene homopolymer fraction (H-PP1) to the second propylene homopolymer fraction (H-PP2) and from the second propylene homopolymer fraction (H-PP2) to the third propylene homopolymer fraction (H-PP3). Accordingly the second propylene homopolymer fraction (H-PP2) has lower melt flow rate $MFR_2$ (230 °C) than the first propylene homopolymer fraction (H-PP1) but a higher melt flow rate $MFR_2$ (230 °C) than the third propylene homopolymer fraction (H-PP3).

Thus the first propylene homopolymer fraction (H-PP1) has the highest melt flow rate $MFR_2$ (230 °C) of the three propylene homopolymer fractions H-PP1, H-PP2, H-PP3, more preferably of all polymers present in the propylene homopolymer (H-PP), i.e. in the matrix (M).

Thus in a preferred embodiment

(a1) two of the three propylene homopolymer fractions (H-PP1), (H-PP2) and (H-PP3) have a melt flow rate $MFR_2$

(230 °C) measured according to ISO 1133 in the range of 80 to 700 g/10min but different to each other, and
(b1) one of the three propylene homopolymer fractions (H-PP1), (H-PP2) and (H-PP3) has a melt flow rate $MFR_2$ (230 °C) measured according to ISO 1133 in the range of 1 to below 100 g/10min,

with the proviso that the melt flow rate $MFR_2$ (230 °C) of the first propylene homopolymer fraction (H-PP1) is higher than the melt flow rate $MFR_2$ (230 °C) from the second propylene homopolymer fraction (H-PP2) and the melt flow rate $MFR_2$ (230 °C) of the second propylene homopolymer fraction (H-PP2) is higher than the melt flow rate $MFR_2$ (230 °C) from the third propylene homopolymer fraction (H-PP3),
more, preferably

(a2) the first propylene homopolymer fraction (H-PP1) has a melt flow rate $MFR_2$ (230 °C) measured according to ISO 1133 in the range of 120 to 700 g/10min,
(b2) the second propylene homopolymer fraction (H-PP2) has a melt flow rate $MFR_2$ (230 °C) measured according to ISO 1133 in the range of 80 to 500 g/10min, and
(c2) the third propylene homopolymer fraction (H-PP3) has a melt flow rate $MFR_2$ (230 °C) measured according to ISO 1133 in the range of 1 to below 100 g/10min,

with the proviso that the melt flow rate $MFR_2$ (230 °C) of the first propylene homopolymer fraction (H-PP1) is higher than the melt flow rate $MFR_2$ (230 °C) from the second propylene homopolymer fraction (H-PP2) and the melt flow rate $MFR_2$ (230 °C) of the second propylene homopolymer fraction (H-PP2) is higher than the melt flow rate $MFR_2$ (230 °C) from the third propylene homopolymer fraction (H-PP3).

In the following the three propylene homopolymer fractions (H-PP1), (H-PP2), and (H-PP3) will described in more detail.

As stated above the first propylene homopolymer fraction (H-PP1) is featured by rather high melt flow rate $MFR_2$ (230 °C). Accordingly it is appreciated that the melt flow rate $MFR_2$ (230 °C) is in the range of 120 to 700 g/10min, more preferably in the range of 150 to 600 g/10min, still more preferably in the range of 180 to 500 g/10min.

Alternatively or additionally the first propylene homopolymer fraction (H-PP1) is defined by a low molecular weight. Thus it appreciated that the first propylene homopolymer fraction (H-PP1) has a weight average molecular weight (Mw) measured by gel permeation chromatography (GPC; ISO 16014-4:2003) of not more than 200 kg/mol, more preferably of not more than 180 kg/mol, yet more preferably in the range of 50 to 180 kg/mol.

As stated above the second propylene homopolymer fraction (H-PP2) has a melt flow rate $MFR_2$ (230 °C) being higher than the third propylene homopolymer fraction (H-PP3). On the other hand the melt flow rate $MFR_2$ (230 °C) of the first propylene homopolymer fraction (H-PP1) can be higher or equally the same, preferably higher, as the melt flow rate $MFR_2$ (230 °C) of the second propylene homopolymer fraction (H-PP2). Accordingly it is appreciated that the second propylene homopolymer fraction (H-PP2) has melt flow rate $MFR_2$ (230 °C) measured according to ISO 1133 in the range of 80 to 500 g/10min, preferably in the range of 90 to 400 g/10min, like in the range of 100 to below 300 g/10min.

Alternatively or additionally the second propylene homopolymer fraction (H-PP2) is defined by a high molecular weight. Thus it appreciated that the second propylene homopolymer fraction (H-PP2) has a weight average molecular weight (Mw) measured by gel permeation chromatography (GPC; ISO 16014-4:2003) of not more than 220 kg/mol, more preferably of not more than 200 kg/mol, yet more preferably in the range of 70 to 200 kg/mol.

Preferably the weight ratio between the first propylene homopolymer fraction (H-PP1) and the second propylene homopolymer fraction (H-PP2) is 2:1 to 1:2, more preferably 1.5:1 to 1:1.5.

As stated above the third propylene homopolymer fraction (H-PP3) has preferably the lowest melt flow rate $MFR_2$ (230 °C) of the three propylene homopolymer fractions (H-PP1), (H-PP2), and (H-PP3), more preferably the lowest melt flow rate $MFR_2$ (230 °C) of the polymers present in the propylene homopolymer (H-PP), i.e. in the matrix (M). Accordingly it is appreciated that the third propylene homopolymer fraction (H-PP3) has melt flow rate $MFR_2$ (230 °C) measured according to ISO 1133 of not more than 100 g/10min, more preferably of in the range of 1 to 100 g/10min, yet more preferably in the range of 1 to 50 g/10min, like in the range of 2 to 30 g/10min.

Alternatively or additionally the third polypropylene (PP3) is defined by its weight average molecular weight (Mw). Thus it appreciated that the third polypropylene (PP3) has a weight average molecular weight (Mw) measured by gel permeation chromatography (GPC; ISO 16014-4:2003) of at least 210 kg/mol, more preferably of at least 230 kg/mol, yet more preferably in the range of 230 to 700 kg/mol.

Preferably the weight ratio between the second propylene homopolymer fraction (H-PP2) and the third propylene homopolymer fraction (H-PP3) is 2:1 to 1:2, more preferably 1.5:1 to 1:1.5.

Very good results are achievable in case the propylene homopolymer (H-PP) comprises

(a) 25.0 to 50.0 wt.-%, preferably 32.0 to 41.0 wt.-%, of the first propylene homopolymer fraction (H-PP1),
(b) 24.0 to 45.0 wt.-%, preferably 28.0 to 38.0 wt.-%, of the second propylene homopolymer fraction (H-PP2), and

(c) 15.0 to 35.0 wt.-%, preferably 20.0 to 30.0 wt.-%, of the third propylene homopolymer fraction (H-PP3),

based on the total amount of the of propylene homopolymer (H-PP), more preferably based on the total amount the first propylene homopolymer fraction (H-PP1), the second propylene homopolymer fraction (H-PP2), and the third propylene homopolymer fraction (H-PP3).

Preferably the propylene homopolymer (H-PP), i.e. the matrix (M), is produced in a sequential polymerization process, preferably as described in detail below. Accordingly the three propylene homopolymer fractions (H-PP1), (H-PP2), and (H-PP3) are an intimate mixture, which is not obtainable by mechanical blending.

A further essential component of the propylene copolymer (Co), i.e. of the heterophasic propylene copolymer (HECO), is the elastomeric propylene copolymer (EC) dispersed in the matrix (M), i.e. in the propylene homopolymer (H-PP). Concerning the comonomers used in the elastomeric propylene copolymer (EC) it is referred to the information provided for the heterophasic propylene copolymer (HECO). Accordingly the elastomeric propylene copolymer (EC) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the elastomeric propylene copolymer (EC) comprises, especially consists of, monomers copolymerizable with propylene from the group consisting of ethylene, 1-butene and 1-hexene. More specifically the elastomeric propylene copolymer (EC) comprises - apart from propylene - units derivable from ethylene and/or 1-butene. Thus in an especially preferred embodiment the elastomeric propylene copolymer (EC) comprises units derivable from ethylene and propylene only.

The properties of the elastomeric propylene copolymer (EC) mainly influence the properties of xylene cold soluble (XCS) fraction of the propylene copolymer (Co), i.e. the heterophasic propylene copolymer (HECO). In other words the properties of the elastomeric propylene copolymer (EC) and of the xylene cold soluble (XCS) are essentially the same. Accordingly with regard to the intrinsic viscosity (IV) and the comonomer content (as well as the type of comonomer) of the elastomeric propylene copolymer (EC) reference is made to the intrinsic viscosity (IV) and the comonomer content (as well as the type of comonomer) of the xylene cold soluble (XCS) fraction provided above.

Preferably, the propylene copolymer (Co), i.e. heterophasic propylene copolymer (HECO), according to this invention preferably comprises

(a) 80.0 to 95.0 wt.-%, more preferably 85.0 to 93.0 wt.-%, yet more preferably 88.0 to 92.0 wt.-%, of the propylene homopolymer (H-PP), and
(b) 5.0 to 20.0 wt.-%, more preferably 7.0 to 15.0 wt.-%, yet more preferably 8.0 to 12.0 wt.-%, of the elastomeric copolymer (EC),

based on the total amount of the propylene homopolymer (H-PP) and the elastomeric copolymer (EC) together.

In a preferred embodiment the propylene copolymer (Co), i.e. heterophasic propylene copolymer (HECO), is $\alpha$-nucleated. Thus in a specific embodiment the propylene copolymer (Co), i.e. heterophasic propylene copolymer (HECO), comprises an $\alpha$-nucleating agent, which is defined in more detail below.

The propylene copolymer (Co), i.e. the heterophasic propylene copolymer (HECO), as defined above is preferably produced by a sequential polymerization process as defined below.

Accordingly the sequential polymerization process for producing the propylene copolymer (Co), i.e. the heterophasic propylene copolymer (HECO), comprises preferably the steps of

(a1) polymerizing propylene in a first reactor (R1) obtaining the first propylene homopolymer fraction (H-PP1),
(b1) transferring the first propylene homopolymer fraction (H-PP1) in a second reactor (R2),
(c1) polymerizing in the second reactor (R2) and in the presence of first propylene homopolymer fraction (H-PP1) propylene obtaining thereby the second propylene homopolymer fraction (H-PP2), the first propylene homopolymer fraction (H-PP1) being mixed with the second propylene homopolymer fraction (H-PP2),
(d1) transferring the mixture of step (c1) in a third reactor (R3),
(e1) polymerizing in the third reactor (R3) and in the presence of the mixture obtained in step (c1) propylene obtaining thereby a third propylene homopolymer fraction (H-PP3), the first propylene homopolymer fraction (H-PP1), the second propylene homopolymer fraction (H-PP2) and the third propylene homopolymer fraction (H-PP3) form the propylene homopolymer (H-PP),
(f1) transferring the propylene homopolymer (H-PP) in a fourth reactor (R4), and
(g1) polymerizing in the fourth reactor (R4) and in the presence of the propylene homopolymer (H-PP) propylene and at least one ethylene and/or a $C_4$ to $C_{12}$ $\alpha$-olefin obtaining thereby an elastomeric propylene copolymer (EC), the propylene homopolymer (H-PP) and the elastomeric propylene copolymer (EC) form the heterophasic propylene copolymer (HECO), i.e. the propylene copolymer (Co).

It is also possible to change the polymerization sequence for producing the first propylene homopolymer fraction

(H-PP1), the second propylene homopolymer fraction (H-PP2) and the third propylene homopolymer fraction (H-PP3). For instance it is possible to produce first the second propylene homopolymer fraction (H-PP2) and subsequently the first propylene homopolymer fraction (H-PP1) and finally the third propylene homopolymer fraction (H-PP3). However in a preferred embodiment the sequence as discussed in the previous paragraph is applied.

Preferably between the second reactor (R2) and the third reactor (R3) and optionally between the third reactor (R3) and fourth reactor (R4) the monomers are flashed out.

For preferred embodiments of the heterophasic propylene copolymer (HECO), the propylene homopolymer (H-PP), the first propylene homopolymer fraction (H-PP1), the second propylene homopolymer fraction (H-PP2), and the third propylene homopolymer fraction (H-PP3), as well as for the elastomeric copolymer (EC) reference is made to the definitions given above.

The term "sequential polymerization process" indicates that the polypropylene is produced in at least four reactors connected in series. Accordingly the present process comprises at least a first reactor (R1), a second reactor (R2), a third reactor (R3) and a fourth reactor (R4). The term "polymerization reactor" shall indicate that the main polymerization takes place. Thus in case the process consists of four polymerization reactors, this definition does not exclude the option that the overall process comprises for instance a pre-polymerization step in a prepolymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3) and the fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2), the third reactor (R3) and the fourth reactor (R4) are gas phase reactors (GPR). Accordingly for the instant process at least four, preferably four polymerization reactors, namely a slurry reactor (SR), like loop reactor (LR), a first gas phase reactor (GPR-1), a second gas phase reactor (GPR-2) and a third gas phase reactor (GPR-3) connected in series are used. If needed prior to the slurry reactor (SR) a prepolymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the propylene copolymer (Co), i.e. the heterophasic propylene copolymer (HECO), as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 and 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3) and the fourth reactor (R4), preferably in the second gas phase reactor (GPR-2) and third gas phase reactor (GPR-4), is similar to the second reactor (R2).

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.
In a preferred embodiment, the prepolymerization is conducted as bulk slurry polymerization in liquid propylene, i.e. the liquid phase mainly comprises propylene, with minor amount of other reactants and optionally inert components dissolved therein.
The prepolymerization reaction is typically conducted at a temperature of 10 to 60 °C, preferably from 15 to 50 °C, and more preferably from 20 to 45 °C.
The pressure in the prepolymerization reactor is not critical but must be sufficiently high to maintain the reaction mixture in liquid phase. Thus, the pressure may be from 20 to 100 bar, for example 30 to 70 bar.
The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.
It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.
The precise control of the prepolymerization conditions and reaction parameters is within the skill of the art.
According to the invention the propylene copolymer (Co), i.e. the heterophasic propylene copolymer (HECO), is preferably obtained by a multistage polymerization process, as described above, in the presence of a catalyst system comprising as component (i) a Ziegler-Natta procatalyst which contains a trans-esterification product of a lower alcohol and a phthalic ester.
The procatalyst used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

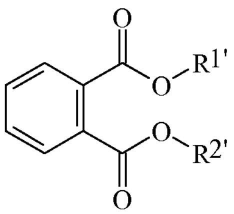
(I)

wherein $R^{1'}$ and $R^2$ are independently at least a $C_5$ alkyl
under conditions where a transesterification between said $C_1$ to $C_2$ alcohol and said dialkylphthalate of formula (I) takes place to form the internal donor

c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.
First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.
The adduct, which is first melted and then spray crystallized or emulsion solidified, is used as catalyst carrier.
In the next step the spray crystallized or emulsion solidified adduct of the formula $MgCl_2^*$nROH, wherein R is methyl or ethyl, preferably ethyl and n is 1 to 6, is contacting with $TiCl_4$ to form a titanized carrier, followed by the steps of

- adding to said titanised carrier

  (i) a dialkylphthalate of formula (I) with $R^1$ and $R^{2'}$ independently at least a $C_5$-alkyl, like at least a $C_8$-alkyl, or preferably
  (ii) a dialkylphthalate of formula (I) with $R^1$ and $R^{2'}$ being the same and being at least a $C_5$-alkyl, like at least a $C_8$-alkyl,

  or more preferably

(iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

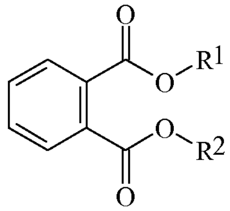
(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (I), yielding diethyl phthalate (DEP) as the internal donor compound.

Still more preferably the catalyst used according to the invention is the BC-1 catalyst of Borealis (prepared according to WO 92/19653 as disclosed in WO 99/24479; especially with the use of dioctylphthalate as dialkylphthalate of formula (I) according to WO 92/19658) or the catalyst Polytrack 8502, commercially available from Grace.

For the production of the propylene copolymer (Co), i.e. the heterophasic propylene copolymer (HECO), according to the invention the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (IIIa) or (IIIb).

Formula (IIIa) is defined by

$$Si(OCH_3)_2R_2^5 \qquad (IIIa)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (IIIb) is defined by

$$Si(OCH_2CH_3)_3(NR^xR^y) \quad (IIIb)$$

wherein $R^x$ and $R^y$ can be the same or different a represent a hydrocarbon group having 1 to 12 carbon atoms.

$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^x$ and $R^y$ are the same, yet more preferably both $R^x$ and $R^y$ are an ethyl group.

More preferably the external donor of formula (IIIb) is diethylaminotriethoxysilane.

More preferably the external donor is selected from the group consisting of diethylaminotriethoxysilane [$Si(OCH_2CH_3)_3(N(CH_2CH_3)_2)$], dicyclopentyl dimethoxy silane [$Si(OCH_3)_2$(cyclo-pentyl)$_2$], diisopropyl dimethoxy silane [$Si(OCH_3)_2(CH(CH_3)_2)_2$] and mixtures thereof. Most preferably the external donor is dicyclopentyl dimethoxy silane [$Si(OCH_3)_2$(cyclo-pentyl)$_{2]}$.

If desired the Ziegler-Natta procatalyst is modified by polymerizing a vinyl compound in the presence of the catalyst system, comprising the special Ziegler-Natta procatalyst (component (i)), the external donor (component (iii)) and optionally the cocatalyst (component (ii)), wherein the vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms. The so modified catalyst is used for the preparation of the propylene copolymer (Co), i.e. of the heterophasic propylene copolymer (HECO), to accomplish $\alpha$-nucleation of the propylene copolymer (Co), i.e. of the heterophasic propylene copolymer (HECO) (BNT-technology).

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

**High density polyethylene (HDPE)**

A high density polyethylene (HDPE) is well known in the art and defines a polyethylene which is substantially unbranched, i.e. is of linear structure.

Preferably the high density polyethylene (HDPE) has a density of at least 930 kg/m$^3$, more preferably of at least 940 kg/m$^3$, yet more preferably in the range of 930 to 975 kg/m$^3$, still yet more preferably in the range of 940 to 968 kg/m$^3$, like 950 to 965 kg/m$^3$.

Preferably the high density polyethylene (HDPE) has a rather low melt flow rate. Accordingly in a preferred embodiment the high density polyethylene (HDPE) has a melt flow rate $MFR_2$ (190 °C) of not more than 10.0, more preferably of not more than 5.0 g/10min, still more preferably in the range of 0.01 to 10.0 g/10min, like in the range of 0.1 to 5.0g/10min.

**Mineral filler (F)**

Mineral fillers are known in the art. Preferably the mineral filler (F) according to this invention is an anisotropic mineral filler, like phyllosilicate, mica or wollastonite.

In one preferred embodiment, the mineral filler (F) is selected from the group consisting of mica, wollastonite, kaolinite, smectite, montmorillonite and talc. The most preferred mineral filler (F) is talc.

The mineral filler (F) preferably has a cutoff particle size $d_{95}$ [mass percent] of equal or below 20 $\mu$m, more preferably in the range of 0.5 to 10 $\mu$m, like in the range of 0.5 to 8.0 $\mu$m

Typically the inorganic filler (F) has a surface area measured according to the commonly known BET method with $N_2$ gas as analysis adsorptive of less than 22 m$^2$/g, more preferably of less than 20 m$^2$/g, yet more preferably of less than 18 m$^2$/g.

**The additives (A)**

According to this invention the term "additive (A)" does not cover the filler (F) as defined herein. Accordingly it is preferred that the additives (A) are selected from the group consisting of antioxidants, UV-stabilizers, antistatic agents, demolding agents, nucleating agents, like $\alpha$-nucleating agents, and mixtures thereof.

In view of the use of α-nucleating agents the following should be mentioned. In principle any α-nucleating agent can be used. Examples of especially suitable α-nucleating agents are selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed above), and
(v) mixtures thereof.

However it is preferred that the α-nucleating agent is in particular selected from the group consisting of

(i) salts of monocarboxylic acids and polycarboxylic acids, e.g. sodium benzoate or aluminum tert-butylbenzoate,
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 bis(dimethylbenzylidene) sorbitol),
(iii) substituted nonitol-derivatives, such as 1,2,3,-trideoxy-4,6:5,7-bis-O-[(4-propylphenyl)methylene]-nonitol,
(iv) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], like aluminium-hydroxy-bis[2,2'-methylene-bis(4,6-di-tert-butylphenyl)phosphate] and Li-myristate (NA21),
(v) trisamide-benze derivatives, i.e. N-[3,5-bis-(2,2-dimethyl-propionylamino)-phenyl]-2,2-dimethyl-propionamide,
(vi) vinylcycloalkane polymer and vinylalkane polymer, and
(vii) mixtures thereof.

In a specific embodiment α-nucleating agents as listed under (ii), (iii), (iv), (vi) or of the previous paragraph are used.

Such additives are generally commercially available and are described, for example, in "Plastic Additives Handbook", 5th edition, 2001 of Hans Zweifel.

Typically the α-nucleating agent is part of the propylene copolymer (Co). Accordingly the α-nucleating agent content of the propylene copolymer (Co) is preferably up to 5.0 wt.-% and thus in the polymer composition up to 4 wt.-%. In a preferred embodiment, the propylene copolymer (Co) (consequently the amount in the polymer composition is correspondingly lower) contains from equal or above 0.0001 to equal or below 1.0 wt.-%, more preferably from 0.0005 to 1.0 wt.-%, yet more preferably from 0.01 to 1.0 wt.-%, of a α-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof. It is especially preferred that the propylene copolymer (Co) contains a vinylcycloalkane, like vinylcyclohexane (VCH), polymer and/or vinylalkane polymer.

Typically these additives (A) or part of the additives (A) are included into the propylene copolymer (Co) or into the polymer composition in form of a masterbatch (M). The term masterbatch (M) according to this invention is understood as known in the art. Accordingly the term masterbatch (M) indicates that the amount of the total amount of additives (A) in the masterbatch (M) is higher compared to the total amount of the additives (A) in the end propylene copolymer (Co) and/or in the polymer composition. Therefore in a preferred embodiment the weight ratio of total amount of additives (A) to amount of polyolefin (PO) [A/PO] in the masterbatch (M) is from 1.0/99.0 to 25.0/75.0, more preferably from 1.5/98.5 to 20.0/80.0, yet more preferably from 2.0/98.0 to 15.0/85.0.

Preferably the polyolefin (PO) of the masterbatch (M) is a polypropylene.

**Articles**

The present invention is further directed to articles, preferably to moulded articles, more preferably to injection moulded articles, comprising the instant polymer composition.

Even more preferred the invention is directed to thin wall packaging articles, for example for food, non-food packaging and medical packaging, comprising the instant polymer composition. Preferably, these articles are produced by injection moulding.

The amount of the instant polymer composition in the article, like in the injection molded article, e.g. in the thin-wall packaging article, especially for food and medical packaging, is at least 60 wt.-%, more preferably at least 70 wt.-%, still more preferably at least 90 wt.-%, yet more preferably at least 95 wt.-%, like 95 to 100 wt.-%. It is especially preferred that the instant polymer composition is the only polymer in the article as defined in this paragraph. Accordingly, in an especially preferred embodiment the article, like the injection molded article, e.g. the thin-wall packaging article, especially for food, non-food and medical packaging, consists of the instant polymer composition.

In the following the present invention is further illustrated by means of examples.

### A. Measuring methods

The following definitions of terms and determination methods apply for the above general description of the invention as well as to the below examples unless otherwise defined. **Calculation** of melt flow rate $MFR_2$ (230 °C) of the second propylene homopolymer fraction (H-PP2):

$$MFR(PP2) = 10^{\left[\frac{\log(MFR(R2)) - w(PP1)\ x\ \log(MFR(PP1))}{w(PP2)}\right]} \quad (I)$$

wherein

w(PP1) is the weight fraction of the first propylene homopolymer fraction (H-PP1), i.e. the product of the first reactor (R1),

w(PP2) is the weight fraction of the second propylene homopolymer fraction (H-PP2), i.e. of the polymer produced in the second reactor (R2),

MFR(PP1) is the melt flow rate $MFR_2$ (230 °C) [in g/10min] measured according ISO 1133 of the first propylene homopolymer fraction (H-PP1), i.e. of the product of the first reactor (R1),

MFR(R2) is the melt flow rate $MFR_2$ (230 °C) [in g/10min] measured according ISO 1133 of the product obtained in the second reactor (R2), i.e. the mixture of the first propylene homopolymer fraction (H-PP1) and the second propylene homopolymer fraction (H-PP2),

MFR(PP2) is the calculated melt flow rate $MFR_2$ (230 °C) [in g/10min] of the second propylene homopolymer fraction (H-PP2).

**Calculation** of melt flow rate $MFR_2$ (230 °C) of the third propylene homopolymer fraction (H-PP3):

$$MFR(PP3) = 10^{\left[\frac{\log(MFR(R3)) - w(R2)\ x\ \log(MFR(R2))}{w(PP3)}\right]} \quad (II)$$

wherein

w(R2) is the weight fraction of the second reactor (R2), i.e. the mixture of the first propylene homopolymer fraction (H-PP1) and the second propylene homopolymer fraction (H-PP2),

w(PP3) is the weight fraction of the third propylene homopolymer fraction (H-PP3), i.e. of the polymer produced in the third reactor (R3),

MFR(R2) is the melt flow rate $MFR_2$ (230 °C) [in g/10min] measured according ISO 1133 of the product of the second reactor (R2), i.e. of the mixture of the first propylene homopolymer fraction (H-PP1) and second propylene homopolymer fraction (H-PP2),

MFR(R3) is the melt flow rate $MFR_2$ (230 °C) [in g/10min] measured according ISO 1133 of the product obtained in the third reactor (R3), i.e. the mixture of the first propylene homopolymer fraction (H-PP1), the second propylene homopolymer fraction (H-PP2), and the third propylene homopolymer fraction (H-PP3),

MFR(PP3) is the calculated melt flow rate $MFR_2$ (230 °C) [in g/10min] of the third propylene homopolymer fraction (H-PP3).

**Number average molecular weight ($M_n$), weight average molecular weight ($M_w$) and molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive

index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument. The Mw of the second propylene homopolymer fraction (H-PP2) and of the third propylene homopolymer fraction (H-PP3) are calculated in analogy to the formulas provided above for the melt flow rate.

**Rheology:** Dynamic rheological measurements were carried out with Rheometrics RDA-II QC on compression molded samples under nitrogen atmosphere at 200°C using 25 mm - diameter plate and plate geometry. The oscillatory shear experiments were done within the linear viscoelastic range of strain at frequencies from 0.01 to 500 rad/s. (ISO 6721-10)

The values of storage modulus (G'), loss modulus (G"), complex modulus (G*) and complex viscosity (η*) were obtained as a function of frequency (ω).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

from the following equations

$$\eta' = G''/\omega \quad \text{and} \quad \eta'' = G'/\omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

**The shear thinning indices, SHI 0/50 and SHI 0/100,**
are ratios of the complex viscosity (η*) at two different shear stresses and measures of the broadness (or narrowness) of the molecular weight distribution. The shear thinning index SHI 0/50 is defined as the ratio of the zero shear viscosity ($\eta_0$) at 200°C and the complex viscosity at 200°C and a shear stress of 50 kPa (($\eta^*_{50}$). The shear thinning index SHI 0/100 is defined as the ratio of the zero shear viscosity ($\eta_0$) at 200°C and the complex viscosity at 200°C and a shear stress of 100 kPa ($\eta^*_{100}$).

**Density** is measured according to ISO 1183-1 - method A (2004). Sample preparation is done by compression moulding in accordance with ISO 1872-2:2007.

**$MFR_2$ (230 °C)** is measured according to ISO 1133 (230 °C, 2.16 kg load).

**$MFR_2$ (190 °C)** is measured according to ISO 1133 (190 °C, 2.16 kg load).

**Quantification of comonomer content by FTIR spectroscopy**

The comonomer content is determined by quantitative Fourier transform infrared spectroscopy (FTIR) after basic assignment calibrated via quantitative $^{13}C$ nuclear magnetic resonance (NMR) spectroscopy in a manner well known in the art. Thin films are pressed to a thickness of between 100-500 μm and spectra recorded in transmission mode. Specifically, the ethylene content of a polypropylene-co-ethylene copolymer is determined using the baseline

corrected peak area of the quantitative bands found at 720-722 and 730-733 $cm^{-1}$. Specifically, the butene or hexene content of a polyethylene copolymer is determined using the baseline corrected peak area of the quantitative bands found at 1377-1379 $cm^{-1}$. Quantitative results are obtained based upon reference to the film thickness. **The xylene cold solubles (XCS, wt.-%):** Content of xylene cold solubles (XCS) is determined at 25 °C according ISO 16152; first edition; 2005-07-01

**Hexane solubles**

1 g of the sample was put into a 300 ml Erlenmeyer flask and 100 ml of hexane was added. The mixture was boiled under stirring in a reflux condenser for 4h. The hot solution was immediately filtered through a folded filter paper N°41 and dried (in a vacuum oven at 90 °C) and weighted (0.0001 g exactly) in a round shenk. The Erlenmeyer flask and the filter were washed with n-hexane. Then the hexane was evaporated under a nitrogen stream on a rotary evaporator. The round shenk was dried in a vacuum oven at 90°C over night and was put into a desiccator for at least 2 hours to cool down. The shenk was weighted again and the hexane soluble was calculated therefrom.
**Intrinsic viscosity** is measured according to DIN ISO 1628/1, October 1999 (in Decalin at 135 °C).
**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.
**The tensile modulus** is measured at 23 °C according to ISO 527-1 (cross head speed 1 mm/min) using injection moulded specimens according to ISO 527-2(1B), produced according to EN ISO 1873-2 (dog bone shape, 4 mm thickness).
**Charpy notched impact strength** is determined according to ISO 179 / 1eA at 23 °C by using injection moulded test specimens as described in EN ISO 1873-2 (80 x 10 x 4 mm). **Puncture energy** is determined in the instrumental falling weight (IFW) test according to ISO 6603-2 using injection moulded plaques of 60x60x2 mm and a test speed of 4.4 m/s. Puncture energy reported results from an integral of the failure energy curve measured at +23°C and -20°C.
**Cutoff particle size d95 (Sedimentation)** is calculated from the particle size distribution [mass percent] as determined by gravitational liquid sedimentation according to ISO 13317-3

(Sedigraph)

**BET** has been measured according to ISO 9277 ($N_2$).

**B. Examples**

All polymers were produced in a Borstar pilot plant with a prepolymerization reactor, one slurry loop reactor and three gas phase reactors. The catalyst Polytrack 8502 (1.9 wt.-% Ti-Ziegler-Natta-catalyst as described in EP 591 224), commercially available from Grace (US), was used in combination with diethylaminotriethoxysilane $[Si(OCH_2CH_3)_3(N(CH_2CH_3)_2)]$ (D-Donor) as external donor and triethylaluminium (TEAL) as activator and scavenger in the ratios indicated in table 1. The catalyst was modified by polymerising a vinyl compound in the presence of the catalyst system as described for example in EP 1183307 A1.

**Table 1:** Preparation of the propylene copolymer (Co)

| **Parameter** | **unit** | **C-PP** |
|---|---|---|
| Donor type | | D |
| Al/donor ratio | [mol/mol] | 15 |
| **Loop** | | |
| Amount prepared | [wt.-%] | 34 |
| ethylene feed | [kg/h] | 0 |
| $MFR_2$ (230 °C) | [g/10min] | 210 |
| XCS | [wt.-%] | 2.0 |
| Mw | [kg/mol] | 142 |
| **GPR1** | | |

(continued)

| Parameter | unit | C-PP |
|---|---|---|
| Amount prepared | [wt.-%] | 31 |
| ethylene feed | [kg/h] | 0 |
| $MFR_2$ (230 °C) | [g/10min] | 170 |
| $MFR_2$ of polymer prepared in GPR 1 | [g/10min] | 133 |
| XCS | [wt.-%] | 1.8 |
| Mw of polymer prepared in GPR 1 | [kg/mol] | 171 |
| **GPR 2** | | |
| Amount prepared | [wt.-%] | 25 |
| ethylene feed | [kg/h] | 0 |
| $MFR_2$ (230 °C) | [g/10min] | 79 |
| $MFR_2$ of polymer prepared in GPR 2 | [g/10min] | 7.9 |
| XCS | [wt.-%] | 1.8 |
| Mw of polymer prepared in GPR 2 | [kg/mol] | 390 |
| SHI 0/50 | [-] | 8.4 |
| **GPR 3** | | |
| Amount prepared | [wt.-%] | 10 |
| ethylene feed (mol ethylen /kmol propylen) | [mol/kmol] | 510 |
| $MFR_2$ (230 °C) | [g/10min] | 48 |
| XCS | [wt.-%] | 11.1 |
| IV ofXCS | [dl/g] | 2.3 |
| C2 | [wt.-%] | 5.1 |
| C2 of XCS | [wt.-%] | 38 |
| SHI 0/50 | [-] | 8.4 |
| SHI 0/100 | [-] | 16.4 |
| Tm | [°C] | 164 |

**Table 2:** Compound recipes for inventive and comparative examples

| Component | CE 1 | CE 2 | CE 3 | CE 4 | IE 1 | IE 2 | IE 3 |
|---|---|---|---|---|---|---|---|
| BH345MO | 100 | - | - | - | - | - | - |
| BH348MO | - | 100 | - | - | - | - | - |
| Co | | | 100 | 98.0 | 93.0 | 88.0 | 83 |
| HDPE | - | - | - | - | 5.0 | 10.0 | 15.0 |
| Talc | - | - | - | 2.0 | 2.0 | 2.0 | 2.0 |

BH345MO is the commercial heterophasic propylene copolymer of Borealis AG. The heterophasic propylene copolymer has a xylene cold soluble (XCS) of 16.5 wt.-%, an ethylene content of 8.2 wt.-% and an ethylene content in the xylene cold soluble of 40 wt.-%. The BH345MO contains 0.5 wt.-% talc.

BH348MO is the commercial heterophasic propylene copolymer of Borealis AG with a xylene cold soluble (XCS) of 19.4 wt.-%, an ethylene content of 12.8 wt.-% and an ethylene content in the xylene cold soluble of 48 wt.-%,

The BH348MO contains 0.8 wt.-% talc. HDPE is the commercial high density polyethylene "VS5580" of Borealis AG with a melt flow rate $MFR_2$ (190 °C) of 0.95 g/10min and a density of 958 kg/m$^3$.

Talc is the commercial talc Jetfine 3CA of Luzenac with d95 of 3.3 μm and a specific surface area of 14.5 m$^2$/g.

**Table 3:** Properties

| | | CE 1 | CE 2 | CE 3 | CE 4 | IE 1 | IE 2 | IE 3 |
|---|---|---|---|---|---|---|---|---|
| $MFR_2$ | [g/10min] | 45 | 50 | 51 | 48 | 46 | 32 | 32 |
| C6-Solubles | [wt.-%] | 3.9 | 6.0 | 2.8 | 2.5 | 2.5 | 2.7 | 2.6 |
| XCS | [wt.-%] | 16.5 | 19.4 | 11.1 | 10.9 | 10.5 | 10.1 | 9.7 |
| SHI 0/50 | [-] | 7.1 | 7.0 | 8.4 | 8.4 | 8.2 | 8.0 | 8.6 |
| SHI 0/100 | [-] | 14.9 | 14.7 | 16.4 | 16.4 | 16.7 | 16.5 | 17.2 |
| Tensile modulus | [MPa] | 1400 | 1050 | 1968 | 1993 | 1830 | 1727 | 1675 |
| Impact strength +23 °C | [kJ/m$^2$] | 6.5 | 11.0 | 3.0 | 3.6 | 6.1 | 6.8 | 7.4 |
| Puncture energy +23 °C | [J] | 30 | 25 | 9.6 | 14 | 23 | 25 | 25 |
| Puncture energy -20 °C | [J] | 22 | 19 | 4.0 | 6.5 | 8.2 | 14 | 17 |

**Claims**

1. Polymer composition having a melt flow rate $MFR_2$ (230 °C) measured according to ISO 1133 of at least 25.0 g/10min, said polymer composition comprises

    (a) a propylene copolymer (Co) having

        (a1) a xylene cold soluble (XCS) content determined according to ISO 16152 (25 °C) in the range of 7.0 to below 20.0 wt.-%;
        (a2) a comonomer content in the range of 3.0 to 12.0 wt.-%;
        (a3) a shear thinning index (SHI 0/50) of at least 7.5;

    wherein further

        (a4) the xylene cold soluble (XCS) fraction of the propylene copolymer (Co) has a comonomer content in the range of 25.0 to 45.0 wt.-%;

    and
    (b) a high density polyethylene (HDPE).

2. Polymer composition according to claim 1, wherein the polymer composition has

    (a) an hexane soluble content of below 6.0 wt.-%;
    and/or
    (b) a xylene cold soluble (XCS) content determined according to ISO 16152 (25 °C) in the range of 7.0 to below 20.0 wt.-%;
    and/or
    (c) shear thinning index (SHI 0/50) of at least 7.5.

3. Polymer composition according to claim 1 or 2, the propylene copolymer (Co) has

    (a) a melt flow rate $MFR_2$ (230 °C) measured according to ISO 1133 of at least 30.0 g/10min;
    and/or
    (b) a melting temperature of at least 155 °C measured according to to ISO 11357-3.

4. Polymer composition according to one of the preceding claims, wherein the intrinsic viscosity (IV) of the xylene cold

soluble (XCS) fraction of the propylene copolymer (Co) measured according to DIN ISO 1628/1 (in decalin at 135 °C) is in the range of 1.8 to 3.0 dl/g.

**5.** Polymer composition according to one of the preceding claims, wherein the propylene copolymer (Co) comprises

(a) a propylene homopolymer (H-PP), and
(b) an elastomeric propylene copolymer (EC),

wherein preferably the propylene homopolymer (H-PP) constitutes the matrix (M) of the propylene copolymer (Co) and the elastomeric propylene copolymer (EC) is dispersed in said matrix (M).

**6.** Polymer composition according to claim 5, wherein the propylene homopolymer (H-PP) has

(a) a shear thinning index (SHI 0/50) of at least 7.5;
and/or
(b) a melt flow rate $MFR_2$ (230 °C) measured according to ISO 1133 of at least 40.0 g/10min;
and/or
(c) a xylene cold soluble (XCS) content determined according to ISO 16152 (25 °C) below 5.0 wt.-%;
and/or
(d) a melting temperature of at least 155 °C measured according to to ISO 11357-3.

**7.** Polymer composition according to claim 5 or 6, wherein the propylene homopolymer (H-PP) comprises at least three propylene homopolymer fractions (H-PP1), (H-PP2) and (H-PP3), the at least three propylene homopolymer fractions (H-PP1), (H-PP2) and (H-PP3) differ from each other by the melt flow rate $MFR_2$ (230 °C) measured according to ISO 1133.

**8.** Polymer composition according to claim 7, wherein

(a1) two of the three propylene homopolymer fractions (H-PP1), (H-PP2) and (H-PP3) have a melt flow rate $MFR_2$ (230 °C) measured according to ISO 1133 in the range of 80 to 700 g/10min but different to each other, and
(b1) one of the three propylene homopolymer fractions (H-PP1), (H-PP2) and (H-PP3) has a melt flow rate $MFR_2$ (230 °C) measured according to ISO 1133 in the range of 1 to below 100 g/10min,

with the proviso that the melt flow rate $MFR_2$ (230 °C) of the first propylene homopolymer fraction (H-PP1) is higher than the melt flow rate $MFR_2$ (230 °C) from the second propylene homopolymer fraction (H-PP2) and the melt flow rate $MFR_2$ (230 °C) of the second propylene homopolymer fraction (H-PP2) is higher than the melt flow rate $MFR_2$ (230 °C) from the third propylene homopolymer fraction (H-PP3),
more, preferably

(a2) the first propylene homopolymer fraction (H-PP1) has a melt flow rate $MFR_2$ (230 °C) measured according to ISO 1133 in the range of 120 to 700 g/10min,
(b2) the second propylene homopolymer fraction (H-PP2) has a melt flow rate $MFR_2$ (230 °C) measured according to ISO 1133 in the range of 80 to 500 g/10min, and
(c2) the third propylene homopolymer fraction (H-PP1) has a melt flow rate $MFR_2$ (230 °C) measured according to ISO 1133 in the range of 1 to below 100 g/10min,

with the proviso that the melt flow rate $MFR_2$ (230 °C) of the first propylene homopolymer fraction (H-PP1) is higher than the melt flow rate $MFR_2$ (230 °C) from the second propylene homopolymer fraction (H-PP2) and the melt flow rate $MFR_2$ (230 °C) of the second propylene homopolymer fraction (H-PP2) is higher than the melt flow rate $MFR_2$ (230 °C) from the third propylene homopolymer fraction (H-PP3).

**9.** Polymer composition according to one of the preceding claims 5 to 8, wherein the weight ratio between the propylene homopolymer (H-PP) and the elastomeric propylene copolymer (EC) [(H-PP)/(EC)] is in the range of 20/1 to 4/1.

**10.** Polymer composition according to one of the preceding claims, wherein the propylene copolymer (Co) is $\alpha$-nucleated.

**11.** Polymer composition according to one of the preceding claims, wherein the high density polyethylene (HDPE) has

(a) a melt flow rate $MFR_2$ (190 °C) measured according to ISO 1133 of not more than 5.0 g/10min; and/or
(b) a density measured according to ISO 1183-187 in the range of 940 to 968 kg/$m^3$.

**12.** Polymer composition according to one of the preceding claims, wherein the polymer composition comprises additionally an mineral filler (F).

**13.** Polymer composition according to one of the preceding claims, wherein the polymer composition comprises

(a) 75 to 97 wt.-% of the propylene copolymer (Co);
(b) 3 to equal or below 20 wt.-% of the high density polyethylene (HDPE); and
(c) optionally up to 5 wt.-% of the mineral filler (F).

**14.** Article comprising a polymer composition according to one of the preceding claims.

**15.** Article according to claim 14, wherein the article is a thin wall packaging article, like a food, non-food or medical packaging article.

**Patentansprüche**

**1.** Polymer-Zusammensetzung mit einer Schmelze-Fließ-Rate $MFR_2$ (230°C), gemessen gemäß ISO 1133, von mindestens 25,0 g/10 min, wobei die Polymer-Zusammensetzung umfasst

(a) ein Propylen-Copolymer (Co) mit

(a1) einem in kaltem Xylol löslichen Gehalt (XCS), bestimmt gemäß ISO 16152 (25°C), in dem Bereich von 7,0 bis unter 20,0 Gew.-%;
(a2) einem Comonomer-Gehalt in dem Bereich von 3,0 bis 12,0 Gew.-%;
(a3) einem Strukturviskositäts-Index (SHI 0/50) von mindestens 7,5;

wobei weiterhin

(a4) die in kaltem Xylol lösliche Fraktion (XCS) des Propylen-Copolymers (Co) einen Comonomer-Gehalt in dem Bereich von 25,0 bis 45,0 Gew.-% aufweist;

und
(b) ein hoch-dichtes Polyethylen (HDPE).

**2.** Polymer-Zusammensetzung nach Anspruch 1, wobei die Polymer-Zusammensetzung aufweist

(a) einen in Hexan löslichen Gehalt von unter 6,0 Gew.-%; und/oder
(b) einen in kaltem Xylol löslichen Gehalt (XCS), bestimmt gemäß ISO 16152 (25°C), in dem Bereich von 7,0 bis unter 20,0 Gew.-%;
und/oder
(c) Strukturviskositäts-Index (SHI 0/50) von mindestens 7,5.

**3.** Polymer-Zusammensetzung nach Anspruch 1 oder 2, wobei das Propylen-Copolymer (Co) aufweist

(a) eine Schmelze-Fließ-Rate $MFR_2$ (230°C), gemessen gemäß ISO 1133, von mindestens 30,0 g/10 min; und/oder
(b) eine Schmelz-Temperatur von mindestens 155°C, gemessen gemäß ISO 11357-3.

**4.** Polymer-Zusammensetzung nach einem der vorangehenden Ansprüche, wobei die Grenz-Viskosität (IV) von der in kaltem Xylol löslichen Fraktion (XCS) des Propylen-Copolymers (Co), gemessen gemäß DIN ISO 1628/1 (in Decalin bei 135°C), in dem Bereich von 1,8 bis 3,0 dl/g liegt.

**5.** Polymer-Zusammensetzung nach einem der vorangehenden Ansprüche, wobei das Propylen-Copolymer (Co) umfasst

(a) ein Propylen-Homopolymer (H-PP), und
(b) ein elastomeres Propylen-Copolymer (EC),

wobei vorzugsweise das Propylen-Homopolymer (H-PP) die Matrix (M) des Propylen-Copolymers (Co) ausmacht und das elastomere Propylen-Copolymer (EC) in der Matrix (M) dispergiert ist.

**6.** Polymer-Zusammensetzung nach Anspruch 5, wobei das Propylen-Homopolymer (H-PP) aufweist

(a) einen Strukturviskositäts-Index (SHI 0/50) von mindestens 7,5;
und/oder
(b) eine Schmelze-Fließ-Rate $MFR_2$ (230°C), gemessen gemäß ISO 1133, von mindestens 40,0 g/10 min;
und/oder
(c) einen in kaltem Xylol löslichen Gehalt (XCS), bestimmt gemäß ISO 16152 (25°C), unter 5,0 Gew.-%;
und/oder
(d) eine Schmelz-Temperatur von mindestens 155°C, gemessen gemäß ISO 11357-3.

**7.** Polymer-Zusammensetzung nach Anspruch 5 oder 6, wobei das Propylen-Homopolymer (H-PP) mindestens drei Propylen-Homopolymer-Fraktionen (H-PP1), (H-PP2) und (H-PP3) umfasst, wobei die mindestens drei Propylen-Homopolymer-Fraktionen (H-PP1), (H-PP2) und (H-PP3) sich voneinander durch die Schmelze-Fließ-Rate $MFR_2$ (230°C), gemessen gemäß ISO 1133, unterscheiden.

**8.** Polymer-Zusammensetzung nach Anspruch 7, wobei

(a1) zwei der drei Propylen-Homopolymer-Fraktionen (H-PP1), (H-PP2) und (H-PP3) eine Schmelze-Fließ-Rate $MFR_2$ (230°C), gemessen gemäß ISO 1133, in dem Bereich von 80 bis 700 g/10 min aufweisen, sich jedoch voneinander unterscheiden, und
(b1) eine der drei Propylen-Homopolymer-Fraktionen (H-PP1), (H-PP2) und (H-PP3) eine Schmelze-Fließ-Rate $MFR_2$ (230°C), gemessen gemäß ISO 1133, in dem Bereich von 1 bis unter 100 g/10 min aufweist,

mit der Maßgabe, dass die Schmelze-Fließ-Rate $MFR_2$ (230°C) von der ersten Propylen-Homopolymer-Fraktion (H-PP1) höher als die Schmelze-Fließ-Rate $MFR_2$ (230°C) von der zweiten Propylen-Homopolymer-Fraktion (H-PP2) ist und die Schmelze-Fließ-Rate $MFR_2$ (230°C) von der zweiten Propylen-Homopolymer-Fraktion (H-PP2) höher als die Schmelze-Fließ-Rate $MFR_2$ (230°C) von der dritten Propylen-Homopolymer-Fraktion (H-PP3) ist, bevorzugter

(a2) die erste Propylen-Homopolymer-Fraktion (H-PP1) eine Schmelze-Fließ-Rate $MFR_2$ (230°C), gemessen gemäß ISO 1133, in dem Bereich von 120 bis 700 g/10 min aufweist,
(b2) die zweite Propylen-Homopolymer-Fraktion (H-PP2) eine Schmelze-Fließ-Rate $MFR_2$ (230°C), gemessen gemäß ISO 1133, in dem Bereich von 80 bis 500 g/10 min aufweist, und
(c2) die dritte Propylen-Homopolymer-Fraktion (H-PP1) eine Schmelze-Fließ-Rate $MFR_2$ (230°C), gemessen gemäß ISO 1133, in dem Bereich von 1 bis unter 100 g/10 min aufweist,

mit der Maßgabe, dass die Schmelze-Fließ-Rate $MFR_2$ (230°C) von der ersten Propylen-Homopolymer-Fraktion (H-PP1) höher als die Schmelze-Fließ-Rate $MFR_2$ (230°C) von der zweiten Propylen-Homopolymer-Fraktion (H-PP2) ist und die Schmelze-Fließ-Rate $MFR_2$ (230°C) von der zweiten Propylen-Homopolymer-Fraktion (H-PP2) höher als die Schmelze-Fließ-Rate $MFR_2$ (230°C) von der dritten Propylen-Homopolymer-Fraktion (H-PP3) ist.

**9.** Polymer-Zusammensetzung nach einem der vorangehenden Ansprüche 5 bis 8, wobei das Gewichts-Verhältnis zwischen dem Propylen-Homopolymer (H-PP) und dem elastomeren Propylen-Copolymer (EC) [(H-PP)/(EC)] in dem Bereich von 20/1 bis 4/1 liegt.

**10.** Polymer-Zusammensetzung nach einem der vorangehenden Ansprüche, wobei das Propylen-Copolymer (Co) $\alpha$-nukleiert ist.

**11.** Polymer-Zusammensetzung nach einem der vorangehenden Ansprüche, wobei das hoch-dichte Polyethylen (HDPE) aufweist

(a) eine Schmelze-Fließ-Rate $MFR_2$ (190°C), gemessen gemäß ISO 1133, von nicht mehr als 5,0 g/10 min; und/oder
(b) eine Dichte, gemessen gemäß ISO 1183-187, in dem Bereich von 940 bis 968 $kg/m^3$.

**12.** Polymer-Zusammensetzung nach einem der vorangehenden Ansprüche, wobei die Polymer-Zusammensetzung zusätzlich einen Mineral-Füllstoff (F) umfasst.

**13.** Polymer-Zusammensetzung nach einem der vorangehenden Ansprüche, wobei die Polymer-Zusammensetzung umfasst

(a) 75 bis 97 Gew.-% des Propylen-Copolymers (Co);
(b) 3 bis gleich oder unter 20 Gew.-% des hoch-dichten Polyethylens (HDPE); und
(c) gegebenenfalls bis zu 5 Gew.-% des Mineral-Füllstoffs (F).

**14.** Gegenstand, umfassend eine Polymer-Zusammensetzung nach einem der vorangehenden Ansprüche.

**15.** Gegenstand nach Anspruch 14, wobei der Gegenstand ein dünn-wandiger Verpackungs-Gegenstand, wie ein Lebensmittel-, Nicht-Lebensmittel- oder medizinischer Verpackungs-Gegenstand, ist.

**Revendications**

**1.** Composition de polymère présentant un indice de fluage $MFR_2$ (230°C), mesuré conformément à la norme ISO 1133, d'au moins 25,0 g/10 min, ladite composition de polymère comprenant

(a) un copolymère de propylène (Co) présentant

(a1) une teneur en composés solubles dans le xylène froid (XCS), déterminée conformément à la norme ISO 16152 (25°C), située dans la plage allant de 7,0 à moins de 20,0 % en poids ;
(a2) une teneur en comonomères située dans la plage allant de 3,0 à 12,0 % en poids ;
(a3) un indice de fluidification par cisaillement (SHI 0/50) d'au moins 7,5 ;

dans lequel en outre

(a4) la fraction soluble dans le xylène froid (XCS) du copolymère de propylène (Co) présente une teneur en comonomères située dans la plage allant de 25,0 à 45,0 % en poids ;
et

(b) un polyéthylène haute densité (HDPE).

**2.** Composition de polymère selon la revendication 1, laquelle composition de polymère présente

(a) une teneur en composés solubles dans l'hexane inférieure à 6,0 % en poids ;
et/ou
(b) une teneur en composés solubles dans le xylène froid (XCS), déterminée conformément à la norme ISO 16152 (25°C), située dans la plage allant de 7,0 à moins de 20,0 % en poids ;
et/ou
(c) un indice de fluidification par cisaillement (SHI 0/50) d'au moins 7,5.

**3.** Composition de polymère selon la revendication 1 ou 2, dans laquelle le copolymère de propylène (Co) présente

(a) un indice de fluage $MFR_2$ (230°C), mesuré conformément à la norme ISO 1133, d'au moins 30,0 g/10 min ;
et/ou
(b) un point de fusion, mesuré conformément à la norme ISO 11357-3, d'au moins 155°C.

**4.** Composition de polymère selon l'une des revendications précédentes, dans laquelle la viscosité intrinsèque (IV) de la fraction soluble dans le xylène froid (XCS) du copolymère de propylène (Co), mesurée conformément à la norme DIN ISO 1628/1 (dans la décaline à 135°C), est située dans la plage allant de 1,8 à 3,0 dl/g.

5. Composition de polymère selon l'une des revendications précédentes, dans laquelle le copolymère de propylène (Co) comprend

(a) un homopolymère de propylène (H-PP), et
(b) un copolymère de propylène élastomère (EC),

et dans laquelle de préférence l'homopolymère de propylène (H-PP) constitue la matrice (M) du copolymère de propylène (Co) et le copolymère de propylène élastomère (EC) est dispersé dans ladite matrice (M).

6. Composition de polymère selon la revendication 5, dans laquelle l'homopolymère de propylène (H-PP) présente

(a) un indice de fluidification par cisaillement (SHI 0/50) d'au moins 7,5 ;
et/ou
(b) un indice de fluage $MFR_2$ (230°C), mesuré conformément à la norme ISO 1133, d'au moins 40,0 g/10 min ;
et/ou
(c) une teneur en composés solubles dans le xylène froid (XCS), déterminée conformément à la norme ISO 16152 (25°C), inférieure à 5,0 % en poids ;
et/ou
(d) un point de fusion, mesuré conformément à la norme ISO 11357-3, d'au moins 155°C.

7. Composition de polymère selon la revendication 5 ou 6, dans laquelle l'homopolymère de propylène (H-PP) comprend au moins trois fractions d'homopolymère de propylène (H-PP1), (H-PP2) et (H-PP3), les au moins trois fractions d'homopolymère de propylène (H-PP1), (H-PP2) et (H-PP3) différant par leur indice de fluage $MFR_2$ (230°C), mesuré conformément à la norme ISO 1133.

8. Composition de polymère selon la revendication 7, dans laquelle

(a1) deux des trois fractions d'homopolymère de propylène (H-PP1), (H-PP2) et (H-PP3) présentent des indices de fluage $MFR_2$ (230°C), mesurés conformément à la norme ISO 1133, situés dans la plage allant de 80 à 700 g/10 min, mais différents l'un de l'autre, et
(b1) l'une des trois fractions d'homopolymère de propylène (H-PP1), (H-PP2) et (H-PP3) présente un indice de fluage $MFR_2$ (230°C), mesuré conformément à la norme ISO 1133, situé dans la plage allant de 1 à moins de 100 g/10 min, sous réserve que l'indice de fluage $MFR_2$ (230°C) de la première fraction d'homopolymère de propylène (H-PP1) soit supérieur à l'indice de fluage $MFR_2$ (230°C) de la deuxième fraction d'homopolymère de propylène (H-PP2) et que l'indice de fluage $MFR_2$ (230°C) de la deuxième fraction d'homopolymère de propylène (H-PP2) soit supérieur à l'indice de fluage $MFR_2$ (230°C) de la troisième fraction d'homopolymère de propylène (H-PP3), plus préférablement
(a2) la première fraction d'homopolymère de propylène (H-PP1) présente un indice de fluage $MFR_2$ (230°C), mesuré conformément à la norme ISO 1133, situé dans la plage allant de 120 à 700 g/10 min,
(b2) la deuxième fraction d'homopolymère de propylène (H-PP2) présente un indice de fluage $MFR_2$ (230°C), mesuré conformément à la norme ISO 1133, situé dans la plage allant de 80 à 500 g/10 min, et
(c2) la troisième fraction d'homopolymère de propylène (H-PP3) présente un indice de fluage $MFR_2$ (230°C), mesuré conformément à la norme ISO 1133, situé dans la plage allant de 1 à moins de 100 g/10 min,

sous réserve que l'indice de fluage $MFR_2$ (230°C) de la première fraction d'homopolymère de propylène (H-PP1) soit supérieur à l'indice de fluage $MFR_2$ (230°C) de la deuxième fraction d'homopolymère de propylène (H-PP2) et que l'indice de fluage $MFR_2$ (230°C) de la deuxième fraction d'homopolymère de propylène (H-PP2) soit supérieur à l'indice de fluage $MFR_2$ (230°C) de la troisième fraction d'homopolymère de propylène (H-PP3).

9. Composition de polymère selon l'une des revendications 5 à 8, dans laquelle le rapport en poids entre l'homopolymère de propylène (H-PP) et le copolymère de propylène élastomère (EC) [(H-PP)/(EC)] est situé dans la plage allant de 20/1 à 4/1.

10. Composition de polymère selon l'une des revendications précédentes, dans laquelle le copolymère de propylène (Co) est $\alpha$-nucléé.

11. Composition de polymère selon l'une des revendications précédentes, dans laquelle le polyéthylène haute densité (HDPE) présente

(a) un indice de fluage $MFR_2$ (190°C), mesuré conformément à la norme ISO 1133, ne dépassant pas 5,0 g/10 min ; et/ou
(b) une masse volumique, mesurée conformément à la norme ISO 1183-187, située dans la plage allant de 940 à 968 $kg/m^3$.

**12.** Composition de polymère selon l'une des revendications précédentes, laquelle composition de polymère comprend de plus une charge minérale (F).

**13.** Composition de polymère selon l'une des revendications précédentes, laquelle composition de polymère comprend

(a) 75 à 97 % en poids du copolymère de propylène (Co) ;
(b) 3 à 20 % en poids ou moins du polyéthylène haute densité (HDPE) ; et
(c) éventuellement jusqu'à 5 % en poids de la charge minérale (F).

**14.** Article comprenant une composition de polymère selon l'une des revendications précédentes.

**15.** Article selon la revendication 14, lequel article est un article d'emballage à paroi mince, tel qu'un article d'emballage à usage alimentaire, non alimentaire, ou médical.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 591224 A
- EP 1183307 A1

### Non-patent literature cited in the description

- Plastic Additives Handbook. Hans Zweifel, 2001